# EUROPEAN PATENT APPLICATION

(11) **EP 3 255 551 A1**
(43) Date of publication of application: **13.12.2017**
(21) Application number: 16746310.8
(22) Date of filing: 01.02.2016
(51) Int. Cl.: G06F 13/00, G06Q 50/10

(54) **INFORMATION PROCESSING APPARATUS, INFORMATION PROCESSING METHOD, AND INFORMATION PROCESSING SYSTEM**

(30) Priority: 06.02.2015 JP 2015022727
(71) Applicant: Sony Corporation, Tokyo 108-0075 (JP)
(72) Inventor: SHINODA, Masataka, Tokyo 108-0075 (JP); TAKUSHIGE, Katsuhiko, Tokyo 108-0075 (JP); WATANABE, Yuuki, Tokyo 108-0075 (JP); YOSHIDA, Masashi, Tokyo 108-0075 (JP); IZAKI, Daisuke, Tokyo 108-0075 (JP)
(74) Representative: D Young & Co LLP
(86) International application number: PCT/JP2016/000497
(87) International publication number: WO 2016/125478

(57) **Abstract**

An information processing apparatus includes: an interface that receives detection data detected by a sensor terminal including one or more sensors that physically detect a condition of a dialogue partner, the detection data indicating a physical condition of the dialogue partner; and a controller that judges the condition of the dialogue partner from the received detection data, generates first-person statement data from the judged condition, generates a transmission message for an interactive-type SNS, that includes the statement data, and transmits the transmission message to a specific user on the interactive-type SNS.

## Description

### Technical Field

The present technology relates to an information processing apparatus, an information processing method, and an information processing system that are used for managing living things such as pets and livestock.

### Background Art

On the basis of requests for pet owners and the like to sufficiently grasp behaviors and health conditions of pets, a mechanism for animal management and information exchange is starting to be provided. For example, there is an animal behavior management apparatus or the like that detects changes caused by movements of animals by various sensors, stores the detection information in a storage unit, and determines an animal behavior condition on the basis of the detection information stored in the storage unit. Some animal behavior management apparatuses also include a function of providing animal behavior information to a terminal of a user via a network (see, for example, Patent Literature 1).

### Citation List

### Patent Literature

Patent Literature 1: Japanese Patent Application Laid-open No. 2011-44787 (paragraph 0010)

### Disclosure of Invention

### Technical Problem

However, in a mechanism for managing living things such as pets using a network, there are still issues that are required to be improved, and those issues are demanded to be solved.

In view of the circumstances as described above, the present technology aims at providing an information processing apparatus, an information processing method, and an information processing system that are capable of improving management of living things such as pets using a network.

### Solution to Problem

For solving the problems described above, an information processing apparatus according to an embodiment of the present technology includes:
an interface that receives detection data detected by a sensor terminal including one or more sensors that physically detect a condition of a dialogue partner, the detection data indicating a physical condition of the dialogue partner; and
a controller that judges the condition of the dialogue partner from the received detection data, generates first-person statement data from the judged condition, generates a transmission message for an interactive-type SNS, that includes the statement data, and transmits the transmission message to a specific user on the interactive-type SNS.

The dialogue partner may be a living thing.

The controller may be configured to judge at least any one of behavior, emotion, and health of the dialogue partner.

The controller may be configured to analyze a user statement included in a message from the specific user on the interactive-type SNS, generate a response statement data with respect to the user statement, generate the transmission message including the response statement data, and transmit the transmission message to the specific user.

The controller may be configured to analyze a user statement included in a message from the specific user on the interactive-type SNS, search for advertisement data related to the user statement, and generate the statement data using the advertisement data.

The controller may be configured to acquire information on a location of the specific user on the interactive-type SNS, and generate statement data related to the location of the specific user.

The controller may be configured to acquire vital data of the specific user on the interactive-type SNS, and generate the statement data by analyzing the vital data.

An information processing method according to another embodiment of the present technology includes:
receiving, by an interface, detection data detected by a sensor terminal including one or more sensors that physically detect a condition of a dialogue partner, the detection data indicating a physical condition of the dialogue partner; and
judging, by a controller, the condition of the dialogue partner from the received detection data, generating first-person statement data from the judged condition, generating a transmission message for an interactive-type SNS, that includes the statement data, and transmitting the transmission message to a specific user on the interactive-type SNS.

An information processing system according to another embodiment of the present technology includes:
a sensor terminal including
   one or more sensors that physically detect a condition of a dialogue partner, and
   a first communication interface that transmits detection data of the one or more sensors;
   and
an information processing apparatus including
   a second communication interface that receives the detection data transmitted from the sensor terminal, and
   a controller that judges the condition of the dialogue partner from the received detection data, generates first-person statement data from the judged condition, generates a transmission message for an interactive-type SNS, that includes the statement data, and transmits the transmission message to a specific user on the interactive-type SNS.

### Advantageous Effects of Invention

As described above, according to the present technology, management of living things such as pets using a network can be additionally improved.

It should be noted that the effects described herein are not necessarily limited, and any effect described in the present disclosure may be obtained. Brief Description of Drawings
[Fig. 1] A block diagram showing an overall configuration of an information processing system according to a first embodiment of the present technology.
[Fig. 2] A block diagram showing a configuration of a sensor terminal 10 shown in Fig. 1.
[Fig. 3] A block diagram showing a configuration of an information processing apparatus 20 shown in Fig. 1.
[Fig. 4] A block diagram showing a functional configuration of the information processing apparatus 20 shown in Fig. 3.
[Fig. 5] A diagram showing a message exchange example 1 that is displayed on a user information terminal.
[Fig. 6] A diagram showing examples of an animal condition and statement data that are stored in association with each other in a statement database 233.
[Fig. 7] A diagram showing a part of a relationship between stamp IDs and stamp images.
[Fig. 8] A diagram showing a message exchange example 2 that is displayed on the user information terminal.
[Fig. 9] A diagram showing an advertisement data display method in the user information terminal.
[Fig. 10] A diagram showing a message exchange example 3 that is displayed on the user information terminal.
[Fig. 11] A diagram showing a message exchange example 4 that is displayed on the user information terminal.
[Fig. 12] A diagram showing a message exchange example 5 that is displayed on the user information terminal.
[Fig. 13] A diagram showing an example of a message exchange in Operation Example 1.
[Fig. 14] A diagram showing a processing flow of the entire system in Operation Example 1.
[Fig. 15] A flowchart showing a sensor information reception in the information processing apparatus 20.
[Fig. 16] A diagram showing a configuration of an animal ID conversion table.
[Fig. 17] A flowchart showing a physical condition judgment of animals in Operation Example 1.
[Fig. 18] A flowchart showing an emotion judgment of animals in Operation Example 1.
[Fig. 19] A flowchart showing desire presumption of animals in Operation Example 1.
[Fig. 20] A flowchart showing a message reception in Operation Example 1.
[Fig. 21] A diagram showing a human ID conversion table.
[Fig. 22] A flowchart showing a message analysis in Operation Example 1.
[Fig. 23] A diagram showing an example of message analysis data.
[Fig. 24] A flowchart related to animal statement generation in Operation Example 1.
[Fig. 25] A diagram showing an example of animal desire data in Operation Example 1.
[Fig. 26] A diagram showing a processing flow of the entire system in Operation Example 2.
[Fig. 27] A diagram showing an example of a message display screen of the information terminal in Operation Example 2.
[Fig. 28] A diagram showing another example of the message display screen of the information terminal in Operation Example 2.
[Fig. 29] A diagram showing an example of animal desire data in Operation Example 2.
[Fig. 30] A diagram showing a processing flow of the entire system in Operation Example 3.
[Fig. 31] A flowchart showing a message analysis in Operation Example 3.
[Fig. 32] A diagram showing a processing flow of the entire system in Operation Example 4.

### Mode for Carrying Out the Invention

Hereinafter, an embodiment of the present technology will be described with reference to the drawings.

### <First embodiment>

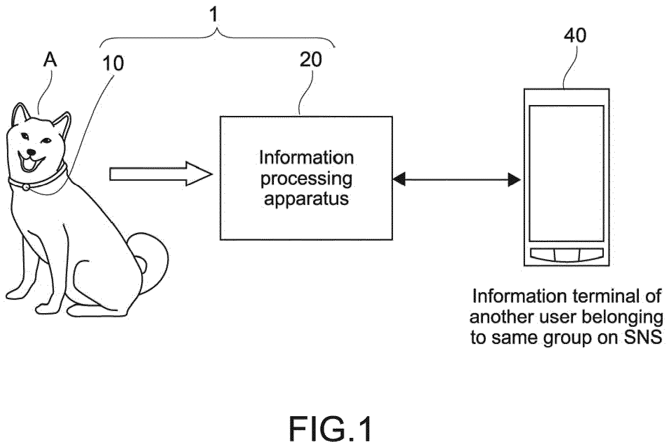

Fig. 1 is a block diagram showing an overall configuration of an information processing system according to a first embodiment of the present technology.

An information processing system 1 includes a sensor terminal 10 and an information processing apparatus 20.

The sensor terminal 10 may be detachable from an animal A such as a household pet, for example. As the detachable sensor terminal 10, there are a collar-integrated type and an accessory type, for example. The accessory-type sensor terminal 10 is detachable from a general collar and the like.

The animal A mentioned herein is not limited to pet animals such as dogs and cats and refers to animals in general, including livestock such as a cow, pig, and chicken, animals in zoos, and human beings. It should be noted that the present technology is also applicable to plants, insects, and the like depending on a sensor type, that is, selection of detection target data. Therefore, the present technology is applicable to whole living things whose condition changes can be physically detected.

### [Sensor terminal 10]

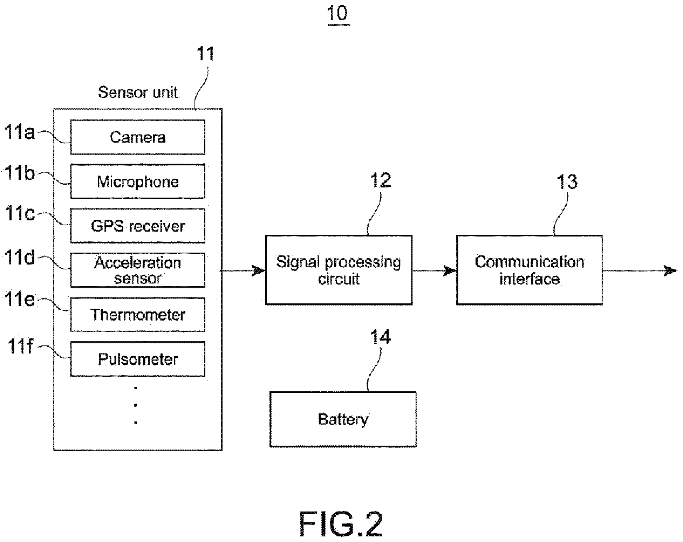

Fig. 2 is a block diagram showing a configuration of the sensor terminal 10.

As shown in the figure, the sensor terminal 10 includes a sensor unit 11, a signal processing circuit 12, a communication interface 13, and a battery 14.

The sensor unit 11 physically detects a condition of the animal A. The sensor unit 11 is configured with one or more sensors 11a, 11b, 11c, 11d, 11e, 11f, ....

Examples of the sensors 11a, 11b, 11c, 11d, 11e, 11f, ... configuring the sensor unit 11 include a camera, a microphone, a GPS (Global Positioning System) receiver, an acceleration sensor, a thermometer, a pulsimeter, a sphygmomanometer, a respirometer, a blood glucose meter, a weight scale, and a pedometer. Of the sensors 11a, 11b, 11c, 11d, 11e, 11f, ..., data obtained by a temperature sensor, the pulsimeter, the sphygmomanometer, the respirometer, the blood glucose meter, the weight scale, and the pedometer is called vital data.

The signal processing circuit 12 converts signals detected by the sensor unit 11 into digital data.

The communication interface 13 is an interface for communicating with the information processing apparatus 20 (first communication interface). The communication interface 13 may be a wireless communication interface.

The battery 14 supplies operation power for the sensor terminal 10.

### [Information processing apparatus 20]

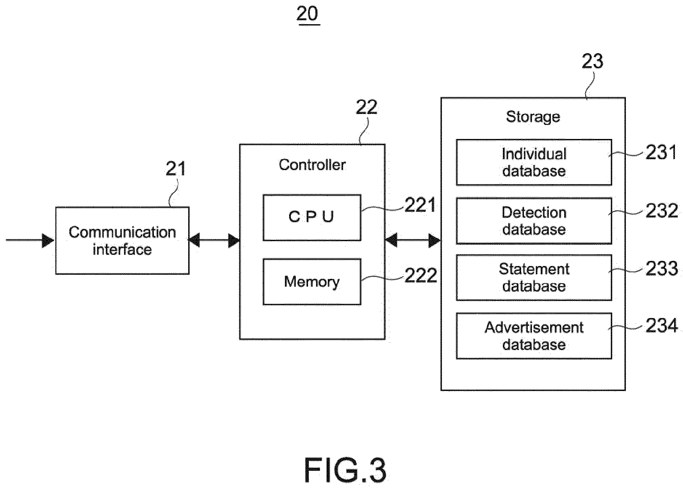

Fig. 3 is a block diagram showing a configuration of the information processing apparatus 20.

As shown in the figure, the information processing apparatus 20 includes a communication interface 21, a controller 22, and a storage 23.

The communication interface 21 is an interface for communicating with the sensor terminal 10 and accessing an interactive-type SNS (second communication interface). The communication interface 21 may be a wireless communication interface. It should be noted that the communication interface 21 may be provided separately for the communication with the sensor terminal 10 and the access to an interactive-type SNS.

The controller 22 includes a CPU (Central Processing Unit) 221 and a memory 222.

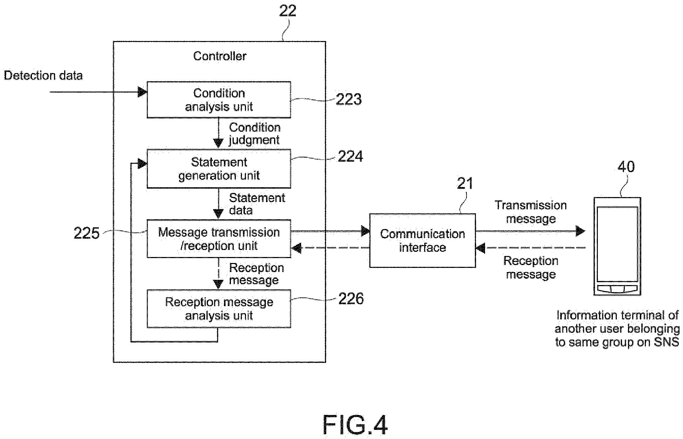

By the CPU 221 executing programs stored in the memory 222, the controller 22 functions as a condition analysis unit 223, a statement generation unit 224, a message transmission/reception unit 225, and a message analysis unit 226 as shown in Fig. 4.

The storage 23 includes various databases. The storage 23 is configured with, for example, a hard disk drive and the like.

As the databases, there are an individual database 231 that stores individual data such as a type, sex, age, medical history, and genetic information of the animal A, a detection database 232 that stores data detected by the sensor unit 11 as detection history data, a statement database 233 that manages statement data, an advertisement database 234 that manages advertisement data, and the like.

### (Functional configuration of controller 22)

Next, the condition analysis unit 223, the statement generation unit 224, the message transmission/reception unit 225, and the message analysis unit 226 as the functional configuration of the controller 22 will be described.

### (Condition analysis unit 223)

The condition analysis unit 223 analyzes data detected by the sensor unit 11 of the sensor terminal 10 and judges a condition of a behavior, emotion, health, and the like of the animal A.

The behavior of the animal A is classified into, for example, "meal", "sleep", "walk", "excretion", and the like. "Meal" is further classified into "hungry", "full", and the like. "Sleep" is further classified into "start of sleep", "sleeping", "end of sleep", and the like. The same holds true for "walk" and "excretion".

The emotion of the animal A is classified into, for example, "joy", "angry", "sad", "fun", "estrus", and the like.

The health of the animal A is classified into, for example, "obese", "slim", "high/low fever", "high/low blood pressure", "good condition", "poor condition", "ill", and the like.

The conditions of the behavior, emotion, health, and the like are not limited to the classifications described above.

### (Condition judgment example 1)

In a case where the sensor is a microphone, the condition analysis unit 223 extracts audio components produced by an animal from audio data, analyzes the audio component data, and judges conditions of behavior, emotion, health, and the like of the animal. A cry of the animal A includes a characteristic feature that reflects the emotion of the animal A. The condition analysis unit 223 judges the emotion of the animal A by extracting that characteristic feature from the audio component data.

### (Condition judgment example 2)

In a case where the sensor is a GPS receiver, the condition analysis unit 223 judges, from GPS signals and time series of the signals, a location of the animal A, a start of a walk, midst of the walk, an end of the walk, a path of the walk, a walking distance, and the like.

### (Condition judgment example 3)

In a case where the sensor is an acceleration sensor, the condition analysis unit 223 judges a movement of the animal A from acceleration data. The condition analysis unit 223 judges conditions of the behavior, emotion, health, and the like of the animal A from the judged movement. For example, a state where the animal A does not move for a long time is a state where the animal A is sleeping, and the animal A starting to move after that indicates wakeup. Further, in the case of dogs, cats, and the like, they lie on their backs when relaxing and bark fiercely when caution arises. By judging these movements unique to animals from acceleration data, the condition analysis unit 223 judges an emotional condition.

### (Condition judgment example 4)

In a case where the sensor is a thermometer, the condition analysis unit 223 analyzes detected body temperature data and detection history data thereof to judge the conditions of the behavior, emotion, health, and the like of the animal A. For example, the condition analysis unit 223 calculates a basal body temperature of the animal A from the detection history data of the body temperature data and compares the detected temperature and the basal body temperature to judge a health condition of the animal A, that is, high temperature/low temperature, for example.

### (Condition judgment example 5)

In a case where the sensor is a pulsimeter, the condition analysis unit 223 analyzes detected pulse rate data and detection history data thereof to judge the conditions of the behavior, emotion, health, and the like of the animal A. For example, by calculating a standard pulse rate from the detection history data of the pulse rate and comparing the detected pulse rate and the standard pulse rate, the condition analysis unit 223 can judge a health condition of the animal A, a degree of an excited state, and the like. Also by analyzing the movements of the animal A obtained by the acceleration data and the like as well as analyzing the pulse rate, the condition analysis unit 223 can judge whether an increase of the pulse rate is due to an activity or due to reasons other than the activity.

Also regarding other types of vital data (blood pressure, respiration rate, blood glucose level, weight, number of footsteps, etc.), the condition analysis unit 223 can similarly judge the conditions of the behavior, emotion, health, and the like of the animal A by analyzing detection data thereof and detection history data of the detection data.

For example, by analyzing weight detection data and detection history data thereof while taking into account individual data of the animal A such as a type, sex, and age, the condition analysis unit 223 can judge the health condition such as "obese" and "slim". Further, the condition analysis unit 223 can judge the behavior condition such as "lack of exercise" on the basis of detection data on the number of footsteps or the like. Accordingly, "obese" and "lack of exercise" can be associated with each other.

In this way, it is desirable to judge the conditions of the behavior, emotion, health, and the like of the animal A on the basis of detection data obtained by a plurality of sensors for enhancing accuracy of the judgment.

### [Statement generation unit 224]

The statement generation unit 224 generates first-person statement data with respect to a result of the judgment on the condition of the animal A, that is obtained by the condition analysis unit 223.

### (Statement data generation example)

A case where the condition analysis unit 223 judges "start of walk" as the behavior condition of the animal A will be assumed.

With respect to the judgment result "start of walk", the statement generation unit 224 reads out, from the statement database 233, statement data associated with the condition of "start of walk" as a statement data generation result.

Subsequently, a case where "midst of walk" is judged as the behavioral condition of the animal A by the condition analysis unit 223 will be assumed.

With respect to the judgment result "midst of walk", the statement generation unit 224 reads out, from the statement database 233, statement data associated with the condition of "midst of walk" as a statement data generation result.

Next, a case where "end of walk" is judged as the behavioral condition of the animal A by the condition analysis unit 223 will be assumed.

With respect to the judgment result "end of walk", the statement generation unit 224 reads out, from the statement database 233, statement data associated with the condition of "end of walk" as a statement data generation result.

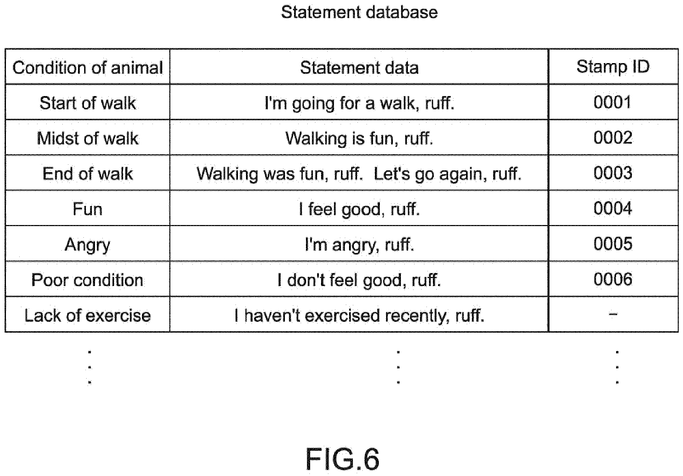

Fig. 6 is a diagram showing examples of the animal condition and statement data that are stored in association with each other in the statement database 233.

One or more pieces of statement data respectively associated with the conditions of the animal A judged by the condition analysis unit 223 are stored in the statement database 233.

For example, statement data "I'm going for a walk, ruff." is stored in association with the condition "start of walk" in the statement database 233. Further, for example, statement data "Walking is fun, ruff." is stored in association with the condition "midst of walk" in the statement database 233. Furthermore, for example, statement data "Walking was fun, ruff. Let's go again, ruff." is stored in association with the condition "end of walk" in the statement database 233.

Accordingly, the series of statement data "I'm going for a walk, ruff.", "Walking is fun, ruff.", and "Walking was fun, ruff. Let's go again, ruff." is automatically generated by the statement generation unit 224.

Further, the statement generation unit 224 is capable of successively generating one or more pieces of statement data with respect to the judgement result on the condition of the animal A, that has been obtained by the condition analysis unit 223. At this time, the following statement data may be generated on the basis of judgement results on other conditions judged by the condition analysis unit 223. For example, in a case where the condition analysis unit 223 judges as having taken a walk every day for a month without taking a day off on the basis of history data on the condition of a walk, statement data "I made a perfect attendance at a walk this month, ruff." may be generated, for example.

### (Other statement data generation example)

1. A case where the condition analysis unit 223 judges "fun" as the emotional condition of the animal A from audio data, movement data, and the like of the animal A will be assumed. In this case, the statement generation unit 224 reads out statement data associated with the condition "fun" from the statement database 233 as a statement data generation result. For example, statement data "I feel good, ruff." is generated.
2. In a case where the condition analysis unit 223 judges "angry" as the emotional condition of the animal A, the statement generation unit 224 reads out statement data associated with the condition "angry" from the statement database 233 as a statement data generation result. For example, statement data "I'm angry, ruff." is generated.
3. In a case where the condition analysis unit 223 judges "poor condition" as the health condition of the animal A, the statement generation unit 224 reads out statement data associated with the condition "poor condition" from the statement database 233 as a statement data generation result. For example, statement data "I don't feel good, ruff." is generated.
4. In a case where the condition analysis unit 223 judges "lack of exercise" as the health condition of the animal A, the statement generation unit 224 reads out statement data associated with the condition "lack of exercise" from the statement database 233 as a statement data generation result. For example, statement data "I haven't exercised recently, ruff." is generated.

### (Selection of stamp)

The statement generation unit 224 is capable of instructing the message transmission/reception unit 225 to transmit a stamp of a picture corresponding to the generated statement data.

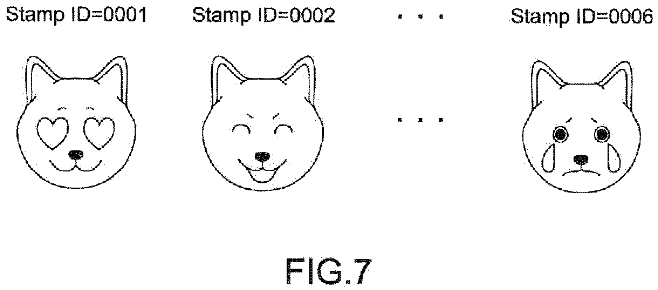

For example, a stamp ID is associated with a part of the statement data stored in the statement database 233. In a case where a stamp ID is associated with the statement data selected by the statement generation unit 224, the message transmission/reception unit 225 is instructed to transmit a stamp on the basis of that stamp ID. The stamp ID is information for specifying stamp images having different pictures. The stamp images may also be stored in the statement database 233. Fig. 7 is a diagram showing a part of a relationship between the stamp IDs and stamp images.

For each attribute of the animal A such as sex and age, statement data using different expressions may respectively be stored with respect to statement contents having the same meaning in the statement database 233, for example.

For example, statement data using different expressions may respectively be stored with respect to statement contents having the same meaning in the statement database 233 on the basis of time and region.

### (Message transmission/reception unit 225)

The message transmission/reception unit 225 transmits a message including statement data generated by the statement generation unit 224 and an ID for specifying a transmission destination to an interactive-type SNS. The interactive-type SNS (Social Networking Site) is a service that realizes real-time dialogues between users via the Internet using information terminals such as a personal computer, a smartphone, and an information terminal. Examples of the interactive-type SNS include LINE (registered trademark), Mixi (registered trademark), Twitter (registered trademark), and Facebook (registered trademark).

With the animal A wearing the sensor terminal 10 being one user on the interactive-type SNS, the message transmission/reception unit 225 logs in on the interactive-type SNS using an ID and password allocated to the information processing apparatus 20 and exchanges messages with an information terminal 40 of another user belonging to the same group on the SNS.

IDs of one or more other users belonging to the same group on the interactive-type SNS are registered in the information processing apparatus 20. Other users are, for example, members of a family including an owner of the animal A wearing the sensor terminal 10.

### (Message transmission timing)

The statement generation unit 224 is capable of autonomously generating statement data at random timings or timings determined by a program, for example. A message transmission timing determined by a program is generated while taking into account a condition preset by a user. For example, a message may be transmitted at an arbitrary time or time interval. Alternatively, it is also possible for statement data to be generated and a message to be transmitted as a judgment result of a specific condition is generated by the condition analysis unit 223.

### (Message analysis unit 226)

As well as analyzing a meaning of statement data included in a message transmitted from the information terminal 40 of another user belonging to the same group, the message analysis unit 226 analyzes a context of the dialogue made with the other user and instructs the statement generation unit 224 to generate which statement data with respect to what state of the animal A.

It should be noted that for improving accuracy in analyzing a meaning of a statement included in the received message or a context of a dialogue, the message analysis unit 226 may machine-learn a relationship between the statement data included in the message from the information terminal 40 of another user belonging to the same group on the SNS and its meaning and use it for the analysis.

### (Message exchange example 1)

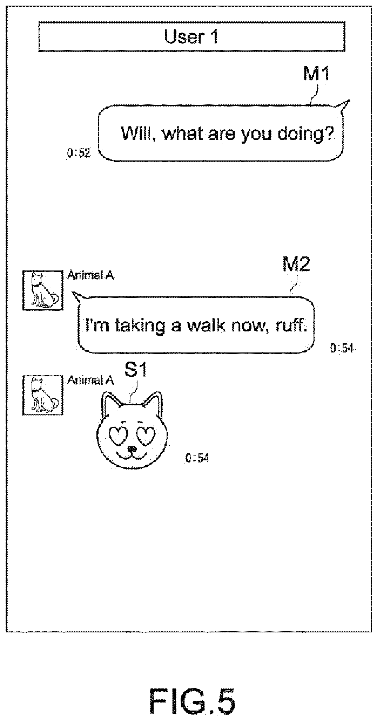

Fig. 5 is a diagram showing, with a message reception from another user belonging to the same group on the SNS being a trigger, an example of a message exchange between the animal A and the other user, on a display screen of the information terminal 40 of the other user.

A message M1 including statement data "Will, what are you doing?" is transmitted from the information terminal 40 of the other user to the animal A, that is, an ID of the information processing apparatus 20. The information processing apparatus 20 receives the message M1 by the message transmission/reception unit 225. Upon receiving the message, the message transmission/reception unit 225 instructs the message analysis unit 226 to analyze the statement data included in the reception message.

The message analysis unit 226 analyzes a meaning of the statement data "Will, what are you doing?". In this example, the message analysis unit 226 instructs the statement generation unit 224 to generate statement data related to the behavioral condition of the animal A on the basis of the analysis result.

In accordance with the instruction, the statement generation unit 224 acquires a judgment result on the behavioral condition of the animal A from the condition analysis unit 223, generates statement data with respect to the judgment result, and instructs the message transmission/reception unit 225 to transmit a transmission message. In accordance with this instruction, the message transmission/reception unit 225 generates a transmission message including the statement data and transmits it to the other user belonging to the same group on the SNS. For example, if the animal is in midst of a walk, language data "I'm taking a walk now, ruff" is generated, and a message M2 including this language data is transmitted to the other user.

Further, a stamp ID (= 0001) is associated with the language data "I'm taking a walk now, ruff" in the statement database 233. The statement generation unit 224 reads out a stamp image corresponding to this stamp ID (= 0001) from the statement database 233 and instructs the message transmission/reception unit 225 to transmit a stamp. In accordance with this instruction, the message transmission/reception unit 225 transmits a stamp S1 to the other user belonging to the same group on the SNS.

In this way, the statement generation unit 224 can automatically generate statement data as a natural response to the statement from the other user belonging to the same group on the SNS. Accordingly, a dialogue with the other user can be continued almost unlimitedly.

### (Generation of statement data using advertisement data and external information)

The statement generation unit 224 is capable of searching for not only statement data stored in the statement database 233 but also advertisement data and external information related to statement contents of another user, that is included in a reception message analyzed by the message analysis unit 226, from the advertisement database 234 and from outside such as the Internet, and generating statement data using those pieces of information.

### (Message exchange example 2)

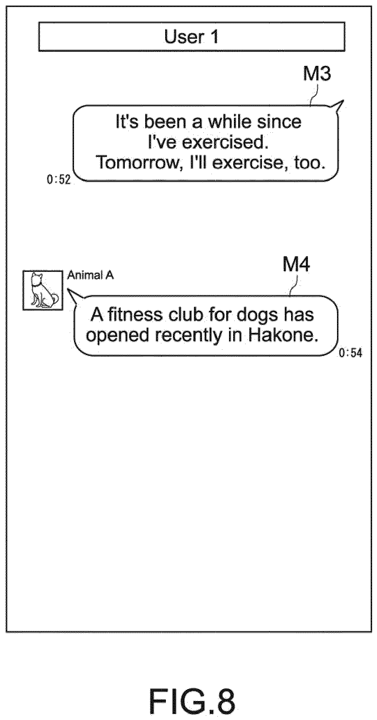

Fig. 8 is a diagram showing an example of exchanging messages including statement data that has been generated using advertisement data and external information.

From a statement "I'll exercise, too" in a message M3 from another user, the statement generation unit 224 searches the advertisement database 234 and outside such as the Internet for advertisement data and external information related to an exercise. In this example, "A fitness club for dogs has opened recently in Hakone." is generated as statement data that uses advertisement data and external information, and a message M4 including this statement data is transmitted to the other user.

### <Modified Example 1>

### (Method of displaying advertisement data excluding message)

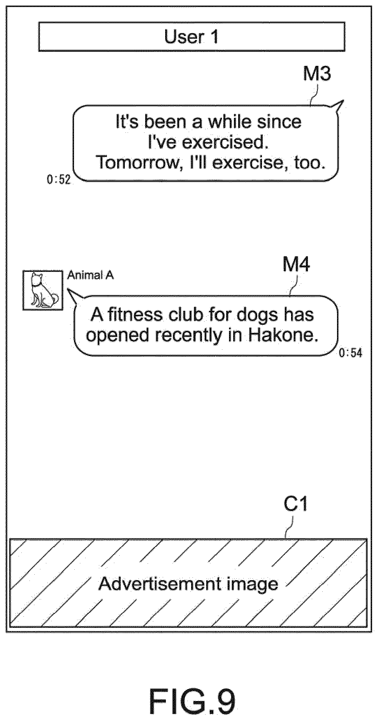

For example, as shown in Fig. 9, advertisement data searched from the advertisement database 234 may be displayed as an advertisement image C1 in a predetermined area set in an SNS message presentation screen. An advertisement image to be displayed on the message presentation screen is stored in the advertisement database 234, and that advertisement image is transmitted to the other user.

### <Modified Example 2>

Further, regarding a search for advertisement data stored in the advertisement database 234, the statement generation unit 224 may refine a search of advertisement data while taking into account the individual data of the animal A, profile information and purchase history of the other user, and the like.

### <Modified Example 3>

If the information processing apparatus 20 is capable of acquiring GPS data indicating a location of the other belonging to the same group on the SNS, the statement generation unit 224 may generate statement data that reflects the location of the other user on the basis of the acquired GPS data of the other user.

### (Message exchange example 3)

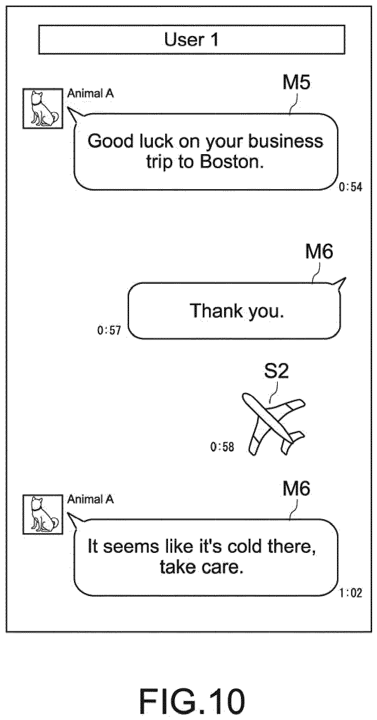

Fig. 10 is a diagram showing an example of exchanging messages including statement data that reflects a location of the other user.

A case where the condition analysis unit 223 judges that the other user is currently in Boston on the basis of acquired GPS data of the other user will be assumed. With respect to this judgment result, the statement generation unit 224 generates statement data "Good luck on your business trip to Boston." or the like, for example, and transmits a message M5 including this statement data to the other user. In addition, in this example, a case where the statement generation unit 224 acquires weather data (external information) of Boston and generates statement data "It seems like it's cold there, take care.", for example, on the basis of the weather data, and the message transmission/reception unit 225 transmits a next message M6 including this statement data to the other user is shown.

### <Modified Example 4>

In a case where the information processing apparatus 20 is capable of accessing vital data such as a weight of another user belonging to the same group on the SNS, the statement generation unit 224 may generate statement data on the basis of a result obtained by the condition analysis unit 223 analyzing the vital data of the other user.

### (Message exchange example 4)

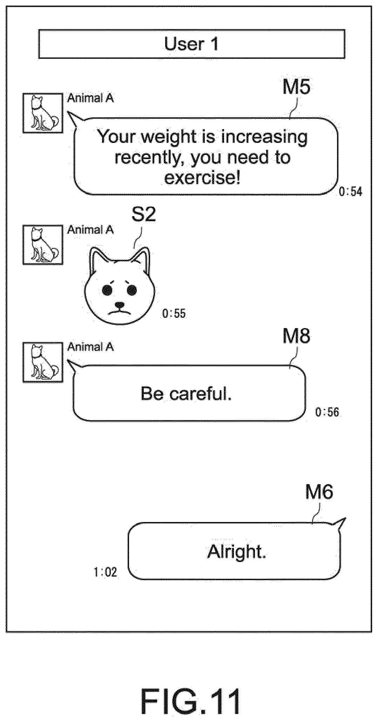

Fig. 11 is a diagram showing an example of exchanging messages including statement data that has been generated on the basis of a result obtained by analyzing the vital data of the other user.

The condition analysis unit 223 analyzes the acquired vital data of the other user. It is assumed that as a result, the condition analysis unit 223 has judged that the other user is in the condition "obese".

On the basis of this judgement result, the statement generation unit 224 generates statement data that prompts the other user to go on a diet, such as "Your weight is increasing recently, you need to exercise!", for example, and the message transmission/reception unit 225 transmits a message M7 including this statement data to the other user.

In the example shown in Fig. 11, a stamp S2 and a message M8 including statement data "Be careful." are transmitted after that to the other user by the message transmission/reception unit 225 in accordance with an instruction from the statement generation unit 224.

### <Modified Example 5>

In a case where the information processing apparatus 20 is capable of accessing vital data such as a value of the number of footsteps obtained by a pedometer and a weight of all the users belonging to the same group on the SNS, the statement generation unit 224 may generate statement data on the basis of a result obtained by the condition analysis unit 223 analyzing the vital data of every user.

### (Message exchange example 5)

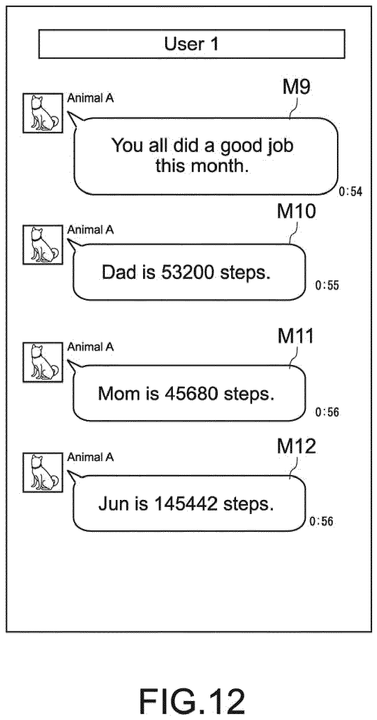

Fig. 12 is a diagram showing an example of exchanging messages including statement data that has been generated on the basis of vital data of all users belonging to the same group on the SNS.

In this example, the values of the pedometers of the users are respectively incorporated into the statement data of the messages M10 to M12 as they are. Since each of the users can compare the values of the pedometers of all the users including him/herself, an enlightenment effect can be expected.

### <Modified Example 6>

The condition analysis unit 223 may judge, on the basis of data detected by external sensors such as a thermometer and a hygrometer, an environmental condition the animal is in on the basis of a temperature and humidity of the environment, and transmit the result to the statement generation unit 224.

The statement generation unit 224 generates statement data expressing contents the animal is assumed to feel with respect to the temperature and humidity of the environment the animal is in. The statement generation unit 224 generates statement data "It's hot today, ruff.", "It's humid today, ruff.", or the like, for example.

### <Modified Example 7>

It is also possible to cause each of a plurality of animals to wear the sensor terminal 10 and enable message exchanges among the animals to be seen via a display screen of an information terminal of users belonging to the same group on the SNS. For example, message exchanges among pets of friends, message exchanges among pets in a zoo, and the like are assumed.

### <Operation Example 1>

Next, as more-specific Operation Example 1 of the information processing system 1 according to the first embodiment, an operation in a case where, with respect to a message transmitted from the information terminal 40 of the user, an animal first-person statement message corresponding to contents of that message is transmitted to the information terminal 40 as a response will be described.

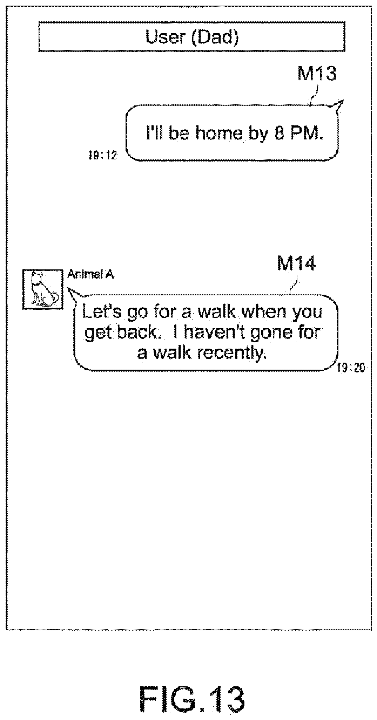

Specifically, Fig. 13 shows a case where, as the user (dad) transmits a message M13 "I'll be home by 8 PM.", a message M14 "Let's go for a walk when you get back. I haven't gone for a walk recently." is transmitted as a statement of the animal A, as a response to the message M13.

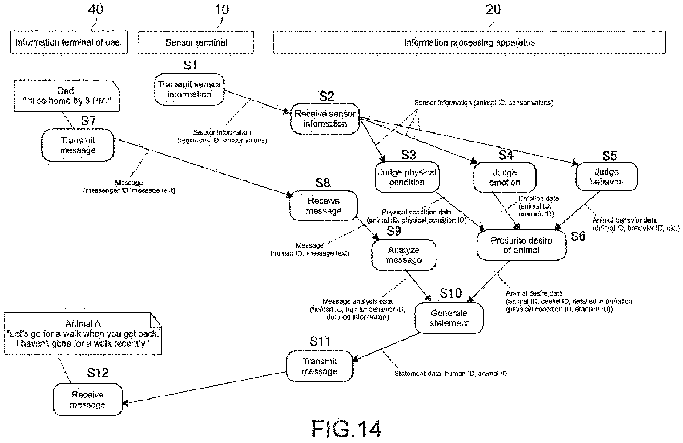

Fig. 14 is a diagram showing a processing flow of the entire system in Operation Example 1.

Signals detected by the sensor terminal 10 of the animal A are transmitted as sensor information to the information processing apparatus 20 via a network (Fig. 14: Step S1). Here, the sensor information transmitted from the sensor terminal 10 to the information processing apparatus 20 includes an apparatus ID allocated to the sensor terminal 10 in advance and respective sensor values of the plurality of sensors 11a, 11b, 11c, 11d, 11e, 11f, ... (see Fig. 2).

### (Sensor information reception processing)

The controller 22 of the information processing apparatus 20 receives the sensor information from the sensor terminal 10 and supplies the sensor information to the condition analysis unit 223 (see Fig. 4) within the controller 22 for judging conditions of the behavior, emotion, health, and the like of the animal A (Fig. 14: Step S2).

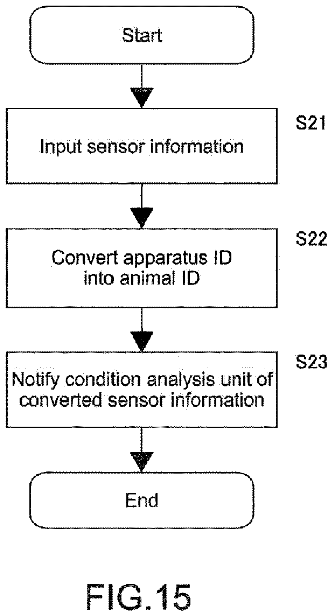

Fig. 15 is a flowchart showing the sensor information reception in the information processing apparatus 20.

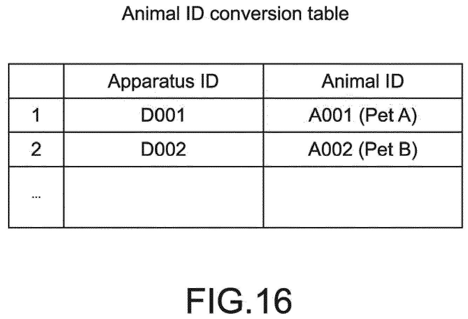

An animal ID conversion table is stored in advance in the storage 23 of the information processing apparatus 20. Fig. 16 is a diagram showing a configuration of the animal ID conversion table. In the animal ID conversion table, a correspondence relationship between an apparatus ID for identifying the sensor terminal 10 and an animal ID as an animal management ID on a current service is stored. The information of the animal ID conversion table is set by the user that uses the service before using the service, for example.

Upon receiving the sensor information from the sensor terminal 10 (Fig. 16: Step S21), the controller 22 of the information processing apparatus 20 references the animal ID conversion table and replaces an apparatus ID included in the sensor information by an animal ID (Fig. 16: Step S22). The sensor information whose apparatus ID is replaced by the animal ID is notified to the condition analysis unit 223 (Fig. 16: Step S23).

### (Physical condition judgment of animal)

The condition analysis unit 223 performs a physical condition judgment of an animal as follows (Fig. 14: Step 3).

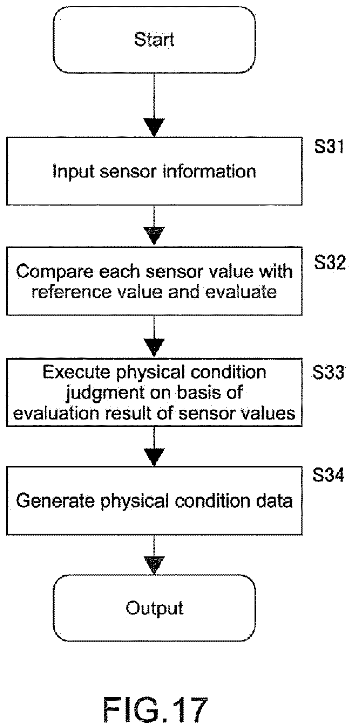

Fig. 17 is a flowchart showing this physical condition judgment.

Upon being input with sensor information (Fig. 17: Step S31), the condition analysis unit 223 evaluates respective sensor values included in this sensor information by comparing them with respective reference values for the physical condition judgment, that are stored in advance in the storage 23 (Fig. 17: Step S32), and performs the physical condition judgment of an animal as follows, for example, on the basis of the evaluation result of the respective sensor values (Fig. 17: Step S33).

1. In a case where a body temperature sensor value is smaller than a physical condition judgment reference value, the physical condition of the animal is judged as "well".
2. In a case where the body temperature sensor value is equal to or larger than the reference value, a respiration rate, a pulse rate, a movement amount per unit time that is measured by an acceleration sensor, and the like are evaluated comprehensively to judge the physical condition of the animal in a plurality of levels like "well", "somewhat poor", "poor", and "ill".

It should be noted that this physical condition judgment method is a mere example, and other various methods may be used for the physical condition judgment.

The condition analysis unit 223 generates physical condition data including a physical condition ID as information for identifying the judged physical condition of the animal and an animal ID (Fig. 17: Step S34). The generated physical condition data is stored in the storage 23 while being attached with management information such as a stored date and time.

### (Animal emotion judgment)

The condition analysis unit 223 judges the emotion of the animal as follows (Fig. 14: Step S4).

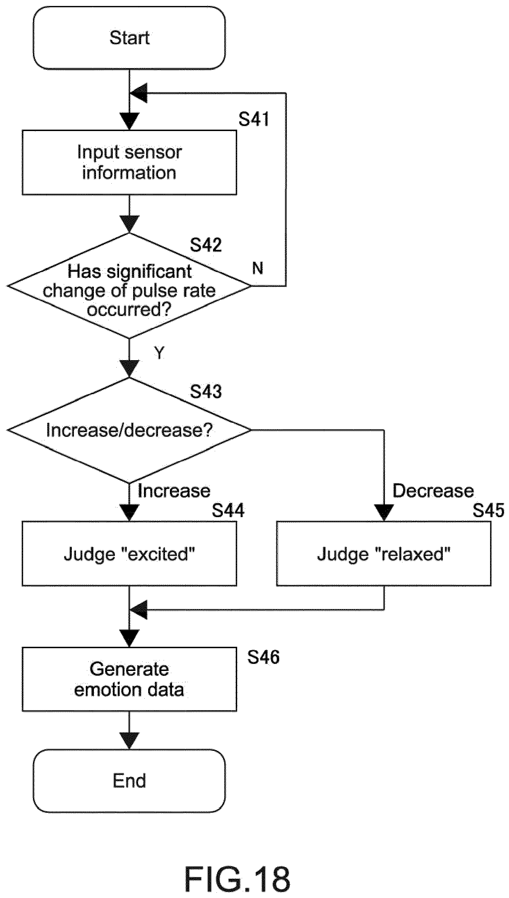

Fig. 18 is a flowchart showing the emotion judgment by the condition analysis unit 223.

It should be noted that here, a case where the emotions to be judged are "excited" and "relaxed" will be described.

Upon being input with sensor information (Fig. 18: Step S41), the condition analysis unit 223 compares a pulse rate included in the sensor information (current pulse rate) with a previous pulse rate and determines whether a significant change has occurred (Fig. 18: Step S42). Here, the significant change of the pulse rate refers to relatively-abrupt increase and decrease accompanying an emotional change of an animal, for example. In a case where a significant change of the pulse rate is determined to have been caused, the condition analysis unit 223 subsequently determines which of an increase and a decrease of the pulse rate that significant change of the pulse rate is (Fig. 18: Step S43). In a case where the significant change of the pulse rate is an increase of the pulse rate, the condition analysis unit 223 judges that the emotional condition of the animal is "excited" (Fig. 18: Step S44). Further, in a case where the significant change of the pulse rate is a decrease of the pulse rate, the condition analysis unit 223 judges that the emotional condition of the animal has changed from "excited" to "relaxed" (Fig. 18: Step S45).

The condition analysis unit 223 generates emotion data including an emotion ID as information for identifying the judged emotion of the animal such as "excited" and "relaxed" and an animal ID (Fig. 18: Step S46). The generated emotion data is stored in the storage 23 while being attached with management information such as a stored date and time.

The emotion judgment method is not limited to the method above, and various other methods may be used.

For example, by comprehensively evaluating a sensor value of a body temperature and other types of sensor values in addition to the pulse rate, the emotions of the animal may be segmented more like "fun", "sad", "nervous", and "frustrated" in addition to "excited" and "relaxed".

### (Animal behavior judgment)

Further, the condition analysis unit 223 judges an animal behavior as follows (Fig. 14: Step S5).

The condition analysis unit 223 performs the animal behavior judgment on the basis of one or more sensor values out of the input sensor information, that is, sensor values of a body temperature, a pulse rate, acceleration data, the number of footsteps, audio produced by an animal, GPS information, and the like, for example. The condition analysis unit 223 generates animal behavior data including an animal behavior ID as information for identifying the judged animal behavior and an animal ID. The generated animal behavior data is stored in the storage 23 while being attached with other information such as a stored date and time.

For example, narrowing down the animal behaviors to "walk", "meal", and "sleep", whether "walk" has been performed can be judged on the basis of one or more sensor values out of the sensor values of acceleration data (animal movement information), the number of footsteps, GPS information, and the like. Whether "meal" has been taken can be judged on the basis of the sensor values of a pulse rate, a blood glucose value, a respiration rate, a blood pressure, a body temperature, and the like. In general, the pulse rate, blood glucose value, blood pressure, and body temperature increase and the respiration rate decreases after meals. Similarly, "sleep" can be judged on the basis of the sensor values of acceleration data (animal movement information), a pulse rate, a blood glucose value, a respiration rate, a blood pressure, a body temperature, and the like.

### (Presumption of animal desire)

Next, the condition analysis unit 223 presumes a desire of an animal on the basis of the animal behavior data (Fig. 14: Step S6). Here, descriptions will be given while narrowing down a target of an animal request to "walk", "meal", and "sleep".

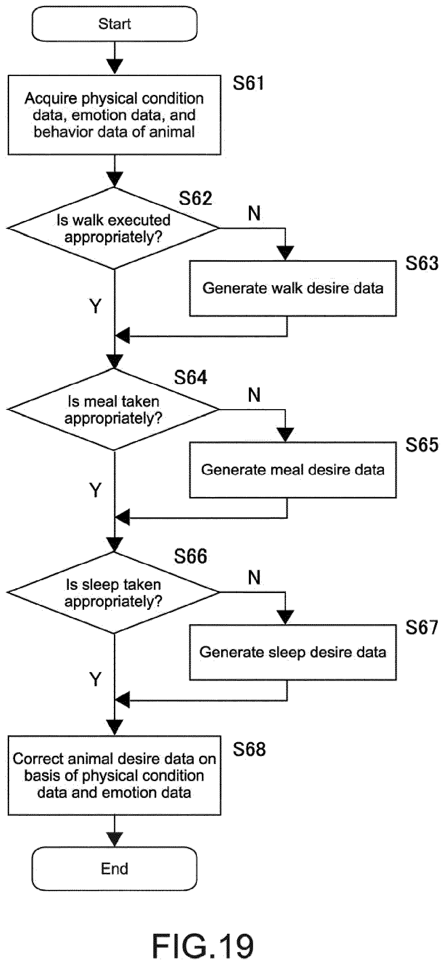

Fig. 19 is a flowchart showing the animal desire presumption by the condition analysis unit 223.

The condition analysis unit 223 acquires physical condition data, emotion data, and animal behavior data (Fig. 19: Step S61).

First, the condition analysis unit 223 analyzes animal behavior data of a certain period to judge whether a walk is executed appropriately (Fig. 19: Step S62). Whether a walk is executed appropriately is judged in accordance with a judgment criterion on whether a frequency of the walk and a time per walk are equal to or larger than threshold values, for example. More specifically, a judgment criterion of "whether a walk of 30 minutes or more has been executed once in two days in the last two weeks" is used, for example. The judgement criterion is arbitrarily set by the user. Upon judging that a walk is not executed appropriately, the condition analysis unit 223 generates walk desire data (Fig. 19: Step S63).

In a case where it is judged that a walk is executed appropriately, the condition analysis unit 223 moves on to the next Step S64 without generating walk desire data.

Next, the condition analysis unit 223 analyzes data on meals in the latest animal behavior data to judge a condition of feeding an animal in accordance with a predetermined judgment criterion (Fig. 19: Step S64). The judgment on the feeding condition is carried out using a delay time of a meal from a predetermined time as an index. More specifically, in a case where a time that has elapsed without a meal since a predetermined time exceeds a specific time (e.g., 1 hour or 2 hours), the condition analysis unit 223 generates meal desire data (Fig. 19: Step S65). When there is no meal delay of a specific time or more from the predetermined time, the condition analysis unit 223 moves on to the next Step S66 without generating meal desire data.

Next, the condition analysis unit 223 analyzes data on a sleep in the latest animal behavior data to judge whether an animal is sleepy in accordance with a predetermined judgment criterion (Fig. 19: Step S66). This judgment is carried out using a time that has elapsed without a sleep since the last time the sleep has ended (wakeup) as an index, for example. Specifically, in a case where the time that has elapsed without a sleep since the last time the sleep has ended exceeds a specific time, the condition analysis unit 223 generates sleep desire data (Fig. 19: Step S67). When the time that has elapsed without a sleep since the last time the sleep has ended does not exceed the predetermined time, the condition analysis unit 223 moves on to the next Step S68 without generating sleep desire data.

It should be noted that the respective judgments above on the walk, emotion, and behavior may be executed in any order.

Next, the condition analysis unit 223 corrects the various types of desire data obtained in the respective steps described above as necessary on the basis of the physical condition data and emotion data of the animal (Fig. 19: Step S68).

For example, in a case where the physical condition of the animal is "somewhat poor" or "poor", the condition analysis unit 223 invalidates the desire by clearing the walk desire data or the like.

Similarly, in a case where the emotion of the animal is not good, for example, in a case where the emotion is "sad" or the like, the condition analysis unit 223 similarly invalidates the desire by clearing the walk desire data or the like.

This correction is carried out not only for the walk desire data but is also similarly carried out for the meal desire data and sleep desire data.

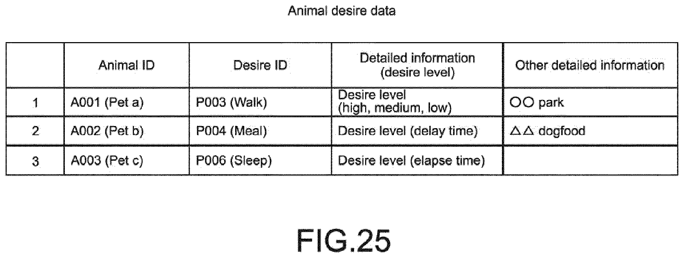

Fig. 25 is a diagram showing an example of the animal desire data.

This diagram shows a case where, on the basis of sensor information acquired from the respective sensor terminals 10 of 3 pets a, b, and c, the condition analysis unit 223 generates desire data of the pets a, b, and c.

As shown in the figure, the pieces of desire data respectively include animal IDs of the pets a, b, and c, desire IDs for identifying a type of desire, and detailed information. This figure shows, in order from the top, walk desire data of the pet a, meal desire data of the pet b, and sleep desire data of the pet c. It should be noted that there are cases where these pieces of desire data are all data of one pet.

Detailed information of the walk desire data includes a desire level and location information, for example. The desire level is given on the basis of a ratio of an actual walking time to a sufficient walking time, for example. For example, the desire level is determined in several levels of high, medium, low, and the like in accordance with a value of that ratio. This desire level can be used as a statement data generation condition. For example, the desire level can be used such that statement data is generated when the desire level is equal to or larger than a predetermined value (medium level). The location information may be a name of a walking place such as a name of a park, for example, that is obtained on the basis of GPS information obtained during a walk and map information. This location information is used by being added to statement data, for example.

Detailed information of the meal desire data includes a desire level indicating an appetite degree and other information. The desire level indicating an appetite degree is given on the basis of a time that has elapsed without a meal since a predetermined meal time or the like, for example. The desire level indicating an appetite degree can be used as a statement data generation condition. For example, the desire level can be used such that statement data is generated when the desire level is equal to or larger than a predetermined value. The other information is set as appropriate by the user and used by being added to statement data, for example. The other information may specifically be a brand of a dogfood a pet favors, or the like.

Detailed information of the sleep desire data includes a desire level indicating a degree of a need for sleep and other information. As a desire value indicating a degree of a need for sleep, a time that has elapsed without a sleep since the last time a sleep has ended, and the like are used, for example. This desire level can also be used as a statement data generation condition. The other information is set as appropriate by the user and used by being added to statement data.

The generated animal desire data is supplied to the statement generation unit 224. The statement generation unit 224 generates first-person statement data from the animal desire data and an analysis result of a message transmitted from the user. Before explaining an operation of this statement generation, an analysis of a message transmitted from the user will be described.

### (Message analysis)

The controller of the information terminal 40 of the user transmits a message obtained by adding a messenger ID to a message text input by the user to the information processing apparatus 20 (Fig. 14: Step S7). The controller 22 of the information processing apparatus 20 (message transmission/reception unit 225) receives the message transmitted from the information terminal 40 (Fig. 14: Step S8).

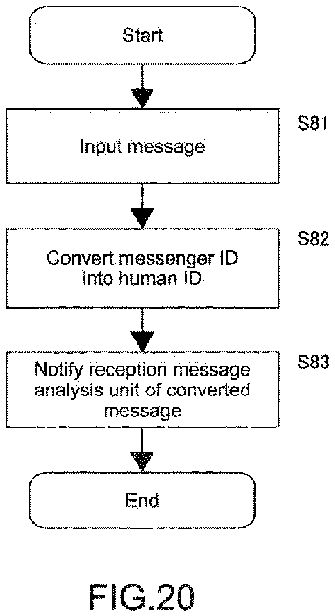

Fig. 20 is a flowchart showing the message reception in the information processing apparatus 20.

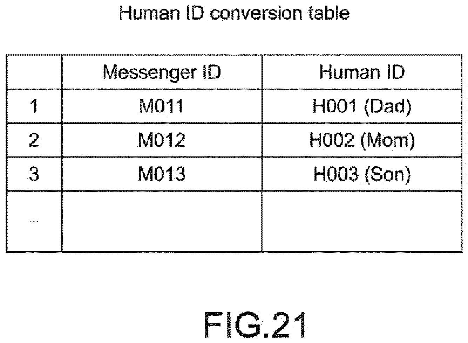

A human ID conversion table is stored in advance in the storage 23 of the information processing apparatus 20. Fig. 21 is a diagram showing a configuration of the human ID conversion table. In the human ID conversion table, a correspondence relationship between a messenger ID as an ID of the information terminal 40 belonging to one SNS group on the SNS and a human ID as a human management ID on the current service is stored. Information of this human ID conversion table is set by the user that uses the service before using the service, for example.

In the controller 22 of the information processing apparatus 20, upon receiving the message transmitted from the information terminal 40 (Fig. 20: Step S81), the message transmission/reception unit 225 references the human ID conversion table and replaces a messenger ID added to the message with a human ID (Fig. 20: Step S82). The message transmission/reception unit 225 supplies the message whose messenger ID is replaced with the human ID to the message analysis unit 226 (Fig. 20: Step S83).

Next, the message analysis unit 226 analyzes the message as follows (Fig. 14: Step S9).

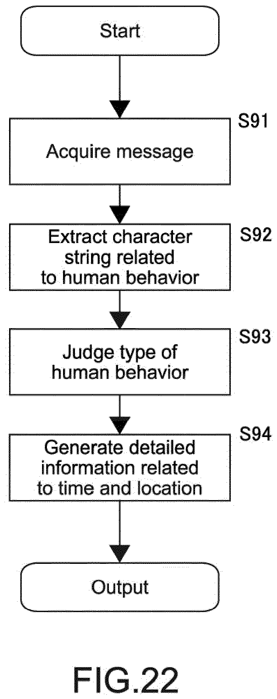

Fig. 22 is a flowchart showing an operation of the message analysis by the message analysis unit 226.

Upon receiving a message including a human ID and a message text from the message transmission/reception unit 225 (Fig. 22: Step S91), the message analysis unit 226 extracts all character strings related to a human behavior (including plan) by analyzing the message text (Fig. 22: Step S92). The human behavior is categorized into various types such as "return home", "shopping", and "club activity". The message analysis unit 226 judges a type of the human behavior from the extracted character strings related to the behavior and judges a human ID allocated to that type (Fig. 22: Step S93).

Next, the message analysis unit 226 generates detailed information related to the human behavior on the basis of the message text and the like (Fig. 22: Step S94). As the detailed information related to the human behavior, there are time information, location information, and the like. For example, in a case where there is a character string related to a time in the message text, the message analysis unit 226 extracts that character string as time information or presumes time information by analyzing a meaning of the message text. Similarly, in a case where there is a character string related to a location in the message text, the message analysis unit 226 extracts that character string as location information or presumes location information by analyzing a meaning of the message text, for example.

The human ID judged by the message analysis unit 226 and the detailed information are stored in the storage 23 as message analysis data together with the human ID.

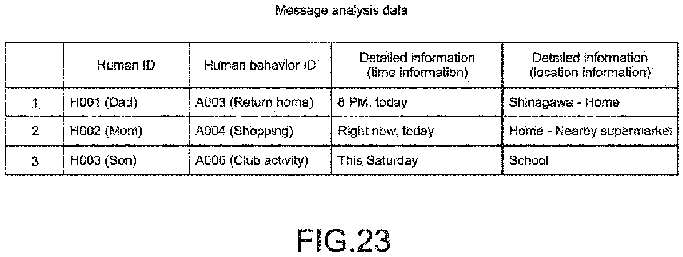

Fig. 23 is a diagram showing an example of the message analysis data.

In message analysis data 1 at the top of the diagram, a result in which "return home" is judged as the type of human behavior, "8 PM" and "today" are judged as the time information, and "Shinagawa - Home" is judged as the location information with respect to a message text "I'll be home by 8 PM" is shown. Here, the location information "Shinagawa" is obtained on the basis of GPS information of the information terminal 40 and map information. The location information "home" is obtained on the basis of the fact that the type of human behavior is "return home".

In message analysis data 2 that is second from top of the diagram, a result in which "shopping" is judged as the type of human behavior, "today" is judged as the time information, and "Home - XX supermarket" is judged as the location information with respect to a message text "I'm going shopping now" is shown. The location information "XX supermarket" is obtained on the basis of GPS information of the information terminal 40 and map information. The location information "home" is obtained on the basis of the fact that the type of human behavior is "shopping".

In message analysis data 3 that is third from top of the diagram, a result in which "club activity" is judged as the type of human behavior, "this Saturday" is judged as the time information, and "school" is judged as the location information with respect to a message text "This Saturday, I have a soccer game for the soccer club." is shown. It should be noted that the location information "school" may be information prepared and associated in advance with "club activity" as the type of human behavior.

The message analysis unit 226 supplies the message analysis data created as described above to the statement generation unit 224. For example, the message analysis data may be supplied to the statement generation unit 224 every time one piece of message analysis data is generated, for example. Alternatively, one or more pieces of message analysis data generated within a predetermined time may be supplied to the statement generation unit 224 at the same time.

### [Statement generation]

Next, the statement generation unit 224 generates first-person statement data of an animal as follows, for example, from animal desire data and human message analysis data (Fig. 14: Step S10).

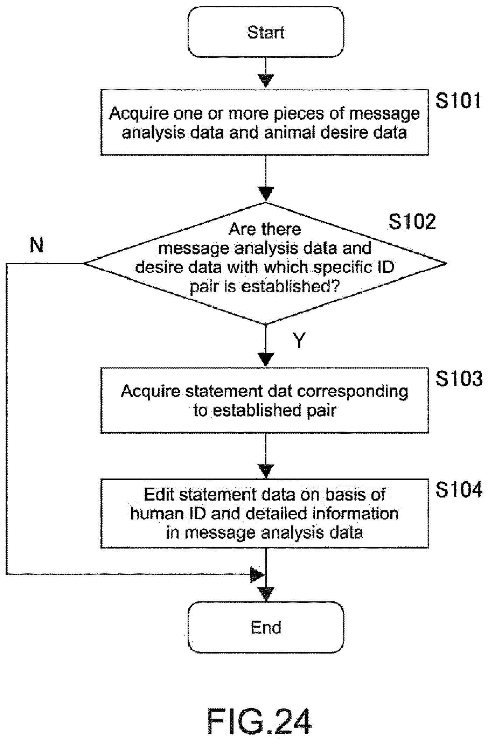

Fig. 24 is a flowchart related to the animal statement generation by the statement generation unit 224.

It should be noted that this flowchart assumes a case where one or more pieces of message analysis data generated within a predetermined time are supplied to the statement generation unit 224 at the same time.

First, the statement generation unit 224 acquires one or more pieces of message analysis data and animal desire data (Step S101).

The statement generation unit 224 selects, from the acquired one or more pieces of message analysis data and animal desire data, message analysis data and animal desire data with which a pair of predetermined human behavior ID and desire ID (hereinafter, referred to as "statement generation ID pair") is established, so as to be capable of generating statement data corresponding to contents of a human message and a condition of the animal.

For example, as the statement generation ID pair including the human behavior ID and desire ID, there are
a pair of the human behavior ID "return home" and the desire ID "walk" (return home - walk),
a pair of the human behavior ID "shopping" and the desire ID "appetite" (shopping - appetite),
and the like.

Alternatively, all combinations of human behavior IDs and desire IDs defined may be prepared as the statement generation ID pair.

Furthermore, one or more types of statement data are stored in advance with respect to each statement generation ID pair in the storage 23 of the controller 22 (statement database 233). Specifically, for example,
"Hi! You haven't taken me for a walk recently. When you get back, take me for a walk!" or the like is stored with respect to a statement generation ID pair (Return home - Walk).

"I'm hungry now. It would be nice if you won me something that I like!" or the like is stored with respect to a statement generation ID pair (Shopping - Meal).

The statement generation unit 224 judges, from the one or more pieces of message analysis data and animal desire data acquired in Step S101, the message analysis data and desire data with which the statement generation ID pair is to be established (Step S102). The statement generation unit 224 reads out statement data corresponding to the established statement generation ID pair from the storage 23 (statement database 233) (Step S103). It should be noted that in a case where no statement generation ID pair is established, statement data generation is ended.

It should be noted that a desire level of desire data may be taken into account as the establishment condition of the statement generation ID pair. For example, a desire level included in desire data with which the statement generation ID pair has been established being equal to or larger than a predetermined value for each desire type may be used as a final establishment condition of the statement generation ID pair.

Next, the statement generation unit 224 corrects a base of statement data on the basis of the human ID, detailed information related to a time, detailed information related to a location, and the like that are included in the message analysis data with which the statement generation ID pair is to be established, to generate eventual statement data (Fig. 24: Step S104). Here, editing of statement data is carried out by partially changing a character string of words, adding a character string, and the like.

For example, the statement generation unit 224 adds a name of the user corresponding to the human ID included in the message analysis data with which the statement generation ID pair is to be established to the statement data. For example, in a case where the name of the user preset in correspondence with the human ID is "Dad", the character string "Dad" is added to a head of the statement data "Hi! You haven't taken me for a walk in a while. When you get back, take me for a walk!", to result in statement data "(Dad) Hi! You haven't taken me for a walk in a while. When you get back, take me for a walk!".

Further, the statement generation unit 224 may also add location information of walk desire data with which the statement generation ID pair is to be established to the statement data. For example, in a case where the location information of walk desire data is "oo park", the character string "oo park" is added to the statement data "Hi! You haven't taken me for a walk recently. When you get back, take me for a walk!", to result in statement data "Hi Dad! You haven't taken me for a walk recently. When you get back, take me for a walk (to oo park)!".

Alternatively, in a case where time information included in the message analysis data is out of a predetermined walking time slot, generation of statement data may be canceled, or a part of statement data may be changed or deleted. For example, in a case where a time to come home becomes as late as 10 PM or later, "You haven't taken me for a walk in a while. When you get back, take me for a walk!" may be deleted from the statement data "Hi! You haven't taken me for a walk in a while. When you get back, take me for a walk!" so that only "Hi!" becomes the statement data.

Furthermore, the statement generation unit 224 may add other detailed information of meal desire data with which the statement generation ID pair is to be established, to the base of the statement data. For example, in a case where the other detailed information of meal desire data is "ΔΔ dogfood", "something" in the statement data "I'm hungry now. It would be nice if you won me something that I like!" is changed to "ΔΔ dogfood", to result in statement data "I'm hungry now. It would be nice if you won me (ΔΔ dogfood) that I like!".

The statement generation unit 224 may control a statement data transmission timing on the basis of the human ID, time information, location information, and the like included in the message analysis data with which the statement generation ID pair is to be established.

For example, it is also possible to presume a time the user actually comes home on the basis of the time information and location information included in the message analysis data and transmit statement data at that time.

The statement generation unit 224 transmits the statement data generated as described above to the message transmission/reception unit 225 together with the human ID included in the message analysis data with which the statement generation ID pair is to be established and the animal ID included in the desire data.

The message transmission/reception unit 225 replaces each of the human ID and animal ID supplied from the statement generation unit 224 with a messenger ID to generate a transmission message for an interactive-type SNS, and transmits the message to the interactive-type SNS (Fig. 14: Step S11).

### <Operation example 2>

Next, as more-specific Operation Example 2 of the information processing system 1 according to the first embodiment, an operation in a case where the statement generation unit 224 acquires external information related to physical condition data and emotion data of an animal and reflects the external information onto statement data will be described.

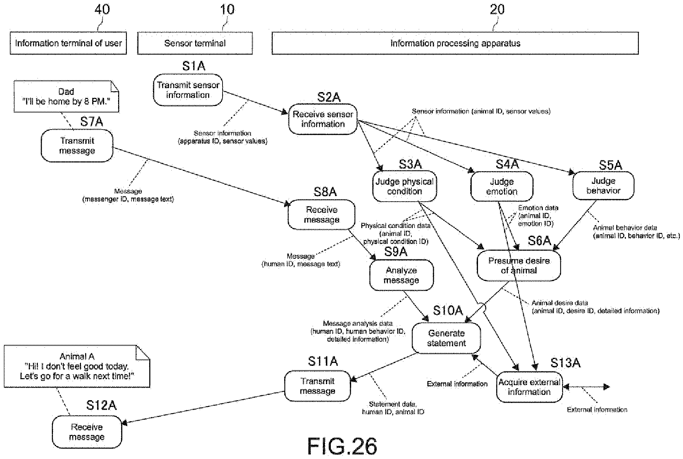

Fig. 26 is a diagram showing a processing flow of the entire system in Operation Example 2.

In this Operation Example 2, operations of transmitting sensor information (Step S1A), receiving the sensor information (Step S2A), judging a physical condition of an animal (Step S3A), judging an emotion of the animal (Step S4A), judging a behavior of the animal (Step S5A), transmitting a message (Step S7A), receiving the message (Step S8A), analyzing the message (Step S9A), transmitting a message (Step S11A), and receiving the message (Step S12A) are the same as those of the corresponding steps of Operation Example 1 described above. Therefore, overlapping descriptions thereof will be omitted.

Operations of presuming a desire of the animal (Step S6A) and generating statement data (Fig. 26: Step S10A) differ from those of the corresponding steps of Operation Example 1 in the following points.

In Operation Example 1 above, the condition analysis unit 223 clears the walk desire data in a case where the physical condition of the animal is "somewhat poor" or "poor" in presuming a desire of the animal or clears the walk desire data in a case where the emotional condition of the animal is "sad" or the like, to invalidate desire data. In contrast, in Operation Example 2, the desire data is not invalidated.

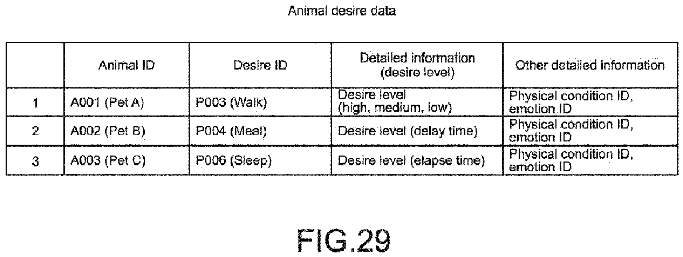

In Operation Example 2, the condition analysis unit 223 adds a physical condition ID and emotion ID respectively extracted from the physical condition data and emotion data to other detailed information of the animal desire data as shown in Fig. 29, for example, and supplies the information to the statement generation unit 224.

In Operation Example 2, the statement generation unit 224 accesses the Internet or the like on the basis of the physical condition ID and emotion ID included in the detailed information of the desire data to acquire external information related to the physical condition and emotion of the animal (Fig. 26: Step S13A). Then, the statement generation unit 224 generates animal statement data on the basis of the animal desire data, the message analysis data, and the external information (Fig. 26: Step S10A).

Here, Operation Example 2 will be described more specifically while narrowing down to a case where the statement generation unit 224 acquires external information related to a physical condition of an animal and uses it for generating statement data.

While statement data is prepared in advance with respect to a statement generation ID pair including a behavior ID and a desire ID in Operation Example 1 above, statement data is prepared in advance with respect to a combination (set) of a behavior ID, a desire ID, and a physical condition ID in Operation Example 2.

For example, statement data "Hi! I have a cold today and don't feel good, so take me for a walk next time!" or the like is stored in the storage 23 (statement database 233) with respect to a statement generation ID set including a human behavior ID of "return home", a desire ID of "walk", and a physical condition ID of "poor condition".

Moreover, statement data "Mom, I have a slight cold, so I'd be glad if you would buy a cold medicine during shopping." or the like is stored in the storage 23 (statement database 233) with respect to a statement generation ID set including a human behavior ID of "shopping", a desire ID of "meal", and a physical condition ID of "poor condition".

For example, in a case where the statement generation ID set of (return home - walk - poor condition) is established, the statement generation unit 224 reads out "Hi! I have a cold today and don't feel good, so take me for a walk next time!", which is statement data corresponding to this statement generation ID set, from the storage 23 (statement database 233).

The statement generation unit 224 accesses external information related to the generated statement data via the Internet and acquires it. Here, since the character string "cold" is included in the generated statement data, the statement generation unit 224 acquires, as the external information, banner advertisements and webpage URLs (Uniform Resource Locators) of veterinary hospitals, drugstores for animals, and animal insurances, for example, via the Internet.

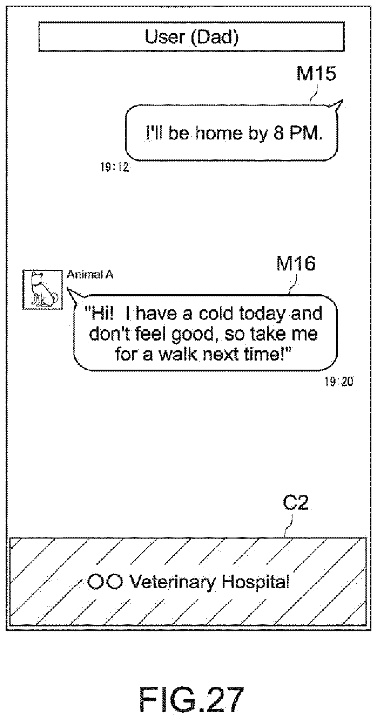

The statement generation unit 224 supplies the acquired external information to the message transmission/reception unit 225 together with the statement data. Accordingly, for example, external information C2 such as a banner advertisement is displayed on a display screen of the information terminal 40 together with a message M16 including the statement data as shown in Fig. 27.

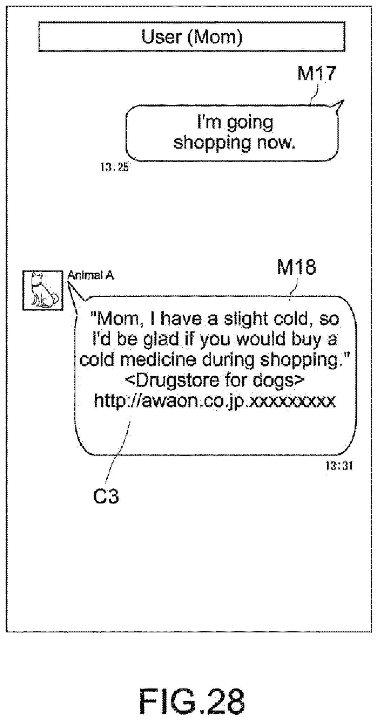

Further, in a case where the statement data "Mom, I have a slight cold, so I'd be glad if you would buy a cold medicine during shopping." is generated, the statement generation unit 224 acquires external information related to "cold medicine" in the statement data via the Internet. For example, in a case where a webpage URL of a drugstore for animals is acquired as the external information, this URL is transmitted to the information terminal 40 by the message transmission/reception unit 225 together with the statement data. As a result, as shown in Fig. 28, a message M18 in which the webpage URL of a drugstore for animals is set as a hyperlink is displayed on the display screen of the information terminal 40. The user of the information terminal 40 can access the webpage of the drugstore for animals using the hyperlink set in the message M18.

### <Operation Example 3>

Next, as more-specific Operation Example 3 of the information processing system 1 according to the first embodiment, an operation in a case where the statement generation unit 24 of the information processing apparatus 20 generates animal statement data on the basis of a message transmitted from the information terminal 40 of the user and sensor information obtained by the sensor terminal, such as the number of footsteps of the user, will be described.

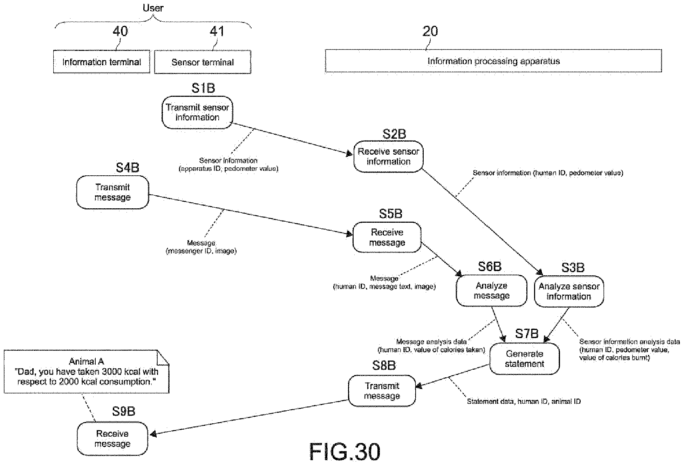

Fig. 30 is a diagram showing a processing flow of the entire system in this Operation Example 3.

First, sensor information detected by a sensor terminal 41 such as a pedometer carried by a user is transmitted to the information processing apparatus 20 (Step S1B). A configuration of the sensor terminal 41 carried by the user is similar to that of the sensor terminal 10 for animals shown in Fig. 2, for example.

### The controller 22 of the information

processing apparatus 20 receives the sensor information from the sensor terminal 41 of the user and supplies it to the condition analysis unit 223 (Step S2B). At this time, the CPU 221 of the information processing apparatus 20 replaces an apparatus ID included in the sensor information with a human ID and notifies the condition analysis unit 223 of the sensor information in which the apparatus ID is replaced with the human ID.

A case where the sensor information is a value of the pedometer will be assumed. The condition analysis unit 223 calculates a value of burnt calories corresponding to a value of the number of footsteps indicated by the notified sensor information on the basis of individual data of the user such as a weight, sex, and age. The condition analysis unit 223 notifies the statement generation unit 224 of sensor information analysis data including the human ID, the pedometer value, and the value of burnt calories (Step S3B).

On the other hand, it is assumed that the user of the information terminal 40 has instructed the controller of the information terminal 40 to attach an image obtained by photographing contents of a meal using a camera function of the information terminal 40 to the message and transmit it. In accordance with this instruction, the controller of the information terminal 40 generates a message including at least an image and a messenger ID and transmits it to the information processing apparatus 20 (Step S4B). It should be noted that the message may also include a message text input by the user.

Upon receiving the message transmitted from the information terminal 40, the message transmission/reception unit 225 of the information processing apparatus 20 replaces the messenger ID added to this message with a human ID and supplies it to the message analysis unit 226 (Step S5B).

Next, the message analysis unit 226 performs the message analysis as follows (Step S6B).

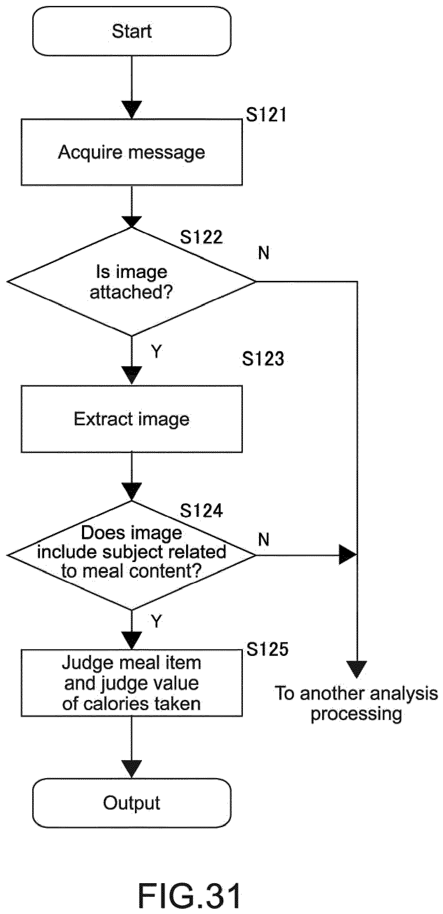

Fig. 31 is a flowchart showing an operation of the message analysis by the message analysis unit 226 in Operation Example 2.

Upon receiving a message from the message transmission/reception unit 225 (Fig. 31: Step S121), the message analysis unit 226 determines whether an image is attached to this message (Fig. 31: Step S122). If an image is attached, the message analysis unit 226 extracts this image (Step S123) and judges by image processing whether the image includes a subject related to a meal content (Step S124). In a case where the image includes a subject related to a meal content, the message analysis unit 226 judges a meal item of each subject related to the meal content by image processing, judges a calorie value of each meal item stored in advance as a database in the storage 23, and calculates a value of calories taken by adding those values (Step S125).

It should be noted that in a case where an image is not attached to the message and in a case where an image is not an image of a subject related to a meal content even when attached to the message, the processing shifts to other analysis processing on the message.

The statement generation unit 224 is notified of the value of calories taken, that has been obtained by the message analysis unit 226 in this way, together with the human ID as the message analysis data.

Next, the statement generation unit 224 generates first-person statement data of an animal as follows, for example, from the sensor information analysis data notified by the condition analysis unit 223 and the message analysis data notified by the message analysis unit 226 (Fig. 30: Step S7B).

On the basis of the fact that the sensor information analysis data includes the value of calories burnt and the message analysis data includes the value of calories taken and a magnitude relationship between the value of calories burnt and the value of calories taken, the statement generation unit 224 reads out statement data related to the calories burnt and the calories taken from the storage 23 (statement database 233). As an example, a case where "Calories as high as Y kcal is taken with respect to X kcal consumption." is read out will be assumed. The statement generation unit 224 substitutes the value of calories burnt included in the sensor information analysis data into "X" of the statement data, substitutes the value of calories taken included in the message analysis data into "Y" of the statement data, and further adds a name of the user corresponding to the human ID included in the sensor information analysis data and the message analysis data at the head of the statement data, to generate eventual statement data. Accordingly, for example, statement data "Dad, you have taken 3000 kcal with respect to 2000 kcal consumption." is generated.

It should be noted that in a case where an image is not attached to the message, statement data related to a value of calories burnt is read out from the statement database 233, and the value of calories burnt included in the sensor information analysis data is substituted therein, to thus generate eventual statement data "You have burnt 2000 kcal by walking.", for example.

Further, in a case where the sensor information from the sensor terminal 41 of the user is not transmitted to the information processing apparatus 20 and a message to which an image is attached is transmitted from the information terminal 40 to the information processing apparatus 20, statement data related to a value of calories taken is read out from the statement database 233, and the value of calories taken judged from the image is substituted therein, to thus generate eventual statement data "You have taken 3000 kcal by a meal.", for example.

### <Operation Example 4>

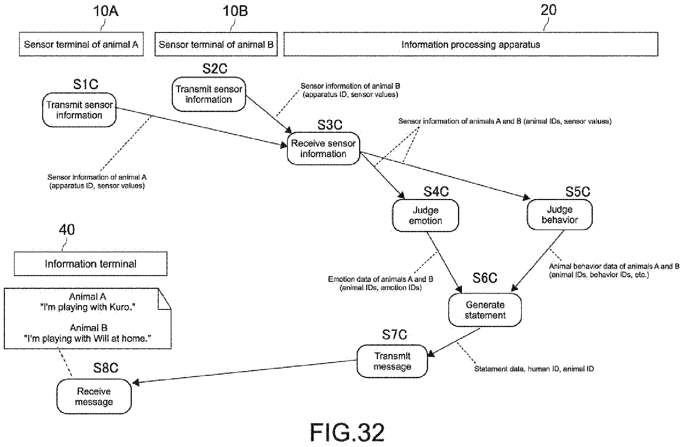

Fig. 32 is a diagram showing a processing flow of the entire system in Operation Example 4.

As more-specific Operation Example 4 of the information processing system 1 according to the first embodiment, an operation in a case where the statement generation unit 224 of the information processing apparatus 20 generates statement data of each of a plurality of animals A and B on the basis of a plurality of pieces of sensor information respectively transmitted from sensor terminals 10A and 10B of the plurality of animals A and B will be described.

First, two pieces of sensor information respectively transmitted from the sensor terminals 10A and 10B of the animals A and B are transmitted to the information processing apparatus 20 (Steps S1C and S2C) .

The controller 22 of the information processing apparatus 20 receives the sensor information from each of the sensor terminals 10A and 10B and supplies each sensor information to the condition analysis unit 223 for judging an emotional condition and behavioral condition of each of the animals A and B (Step S3C).

The condition analysis unit 223 judges the emotional condition and behavioral condition of each of the animals A and B on the basis of the sensor information from each of the sensor terminals 10A and 10B, generates emotion data and animal behavior data of the animals A and B from the judgment result, and notifies the statement generation unit 224 of the data (Steps S4C and S5C).

The statement generation unit 224 generates statement data of the animals A and B on the basis of the emotion data and animal behavior data of the animals A and B.

For example, in a case where both the animals A and B are moving actively nearby and the emotional conditions of the animals A and B are "fun", the statement generation unit 224 generates "I'm playing with Kuro." or the like as statement data of the animal A and generates "I'm playing with Will at home." or the like as statement data of the animal B, for example. Alternatively, in a case where both the animals A and B are sleeping nearby and the emotional conditions of the animals A and B are "relaxed", the statement generation unit 224 generates "zzz ..." or the like as statement data of the animal A and generates "sound asleep" or the like as statement data of the animal B, for example.

The statement data of each of the animals A and B generated by the statement generation unit 224 is supplied to the message transmission/reception unit 225 together with the human ID and the animal ID as the statement source. Here, the human ID may be a human ID of any of the users in the SNS group or may be human IDs of all users.

In this Operation Example 4, it is possible for the user to check how the plurality of animals A and B are spending time from outside. In other words, the present system can be used as means for checking whether a relationship between the plurality of animals A and B is favorable.

### <Other modified examples>

The controller 22 of the information processing apparatus 20 may search for a community page related to pets as external information on the basis of individual data of animals stored in the individual database 231 of the storage 23 or detection history data stored in the detection database 232, and transmit information such as a URL for accessing that community page to the information terminal 40 so as to display it on the display screen.

For example, the controller 22 of the information processing apparatus 20 searches for an optimum community page for, for example, information exchange and counseling related to a discipline, health management, and the like of pets, friends introduction, sales and auction of pet-related goods, pet insurances, pet hotels, and the like from a web in view of conditions on a type, sex, age, medical records, genetic information, and the like of the pets or a history of each of the physical condition, emotion, and behavior of the pets, and transmits it to the information terminal 40 so as to display it on the display screen.

It should be noted that the present technology may also take the following configurations.
(1) An information processing apparatus, including:
   an interface that receives detection data detected by a sensor terminal including one or more sensors that physically detect a condition of a dialogue partner, the detection data indicating a physical condition of the dialogue partner; and
   a controller that judges the condition of the dialogue partner from the received detection data, generates first-person statement data from the judged condition, generates a transmission message for an interactive-type SNS, that includes the statement data, and transmits the transmission message to a specific user on the interactive-type SNS.
(2) The information processing apparatus according to (1), in which
   the dialogue partner is a living thing.
(3) The information processing apparatus according to (1) or (2), in which
   the controller is configured to judge at least any one of behavior, emotion, and health of the dialogue partner.
(4) The information processing apparatus according to any one of (1) to (3), in which
   the controller is configured to analyze a user statement included in a message from the specific user on the interactive-type SNS, generate a response statement data with respect to the user statement, generate the transmission message including the response statement data, and transmit the transmission message to the specific user.
(5) The information processing apparatus according to any one of (1) to (4), in which
   the controller is configured to analyze a user statement included in a message from the specific user on the interactive-type SNS, search for advertisement data related to the user statement, and generate the statement data using the advertisement data.
(6) The information processing apparatus according to any one of (1) to (5), in which
   the controller is configured to acquire information on a location of the specific user on the interactive-type SNS, and generate statement data related to the location of the specific user.
(7) The information processing apparatus according to any one of (1) to (6), in which
   the controller is configured to acquire vital data of the specific user on the interactive-type SNS, and generate the statement data by analyzing the vital data.

### Reference Signs List

- 1: information processing system
- 10: sensor terminal
- 20: information processing apparatus
- 21: communication interface
- 22: controller
- 23: storage
- 40: information terminal
- 221: CPU
- 222: Memory
- 223: condition analysis unit
- 224: statement generation unit
- 225: message transmission/reception unit
- 226: message analysis unit
- 231: individual database
- 232: detection database
- 233: statement database
- 234: advertisement database

## Claims

1. An information processing apparatus, comprising:
an interface that receives detection data detected by a sensor terminal including one or more sensors that physically detect a condition of a dialogue partner, the detection data indicating a physical condition of the dialogue partner; and
a controller that judges the condition of the dialogue partner from the received detection data, generates first-person statement data from the judged condition, generates a transmission message for an interactive-type SNS, that includes the statement data, and transmits the transmission message to a specific user on the interactive-type SNS.

2. The information processing apparatus according to claim 1, wherein
the dialogue partner is a living thing.

3. The information processing apparatus according to claim 2, wherein
the controller is configured to judge at least any one of behavior, emotion, and health of the dialogue partner.

4. The information processing apparatus according to claim 3, wherein
the controller is configured to analyze a user statement included in a message from the specific user on the interactive-type SNS, generate a response statement data with respect to the user statement, generate the transmission message including the response statement data, and transmit the transmission message to the specific user.

5. The information processing apparatus according to claim 3, wherein
the controller is configured to analyze a user statement included in a message from the specific user on the interactive-type SNS, search for advertisement data related to the user statement, and generate the statement data using the advertisement data.

6. The information processing apparatus according to claim 3, wherein
the controller is configured to acquire information on a location of the specific user on the interactive-type SNS, and generate statement data related to the location of the specific user.

7. The information processing apparatus according to claim 3, wherein
the controller is configured to acquire vital data of the specific user on the interactive-type SNS, and generate the statement data by analyzing the vital data.

8. An information processing method, comprising:
receiving, by an interface, detection data detected by a sensor terminal including one or more sensors that physically detect a condition of a dialogue partner, the detection data indicating a physical condition of the dialogue partner; and
judging, by a controller, the condition of the dialogue partner from the received detection data, generating first-person statement data from the judged condition, generating a transmission message for an interactive-type SNS, that includes the statement data, and transmitting the transmission message to a specific user on the interactive-type SNS.

9. An information processing system, comprising:
a sensor terminal including
one or more sensors that physically detect a condition of a dialogue partner, and
a first communication interface that transmits detection data of the one or more sensors; and
an information processing apparatus including
a second communication interface that receives the detection data transmitted from the sensor terminal, and
a controller that judges the condition of the dialogue partner from the received detection data, generates first-person statement data from the judged condition, generates a transmission message for an interactive-type SNS, that includes the statement data, and transmits the transmission message to a specific user on the interactive-type SNS.
